# EUROPÄISCHE PATENTSCHRIFT

(11) **EP 3 988 435 B1**
(45) Veröffentlichungstag und Bekanntmachung des Hinweises auf die Patenterteilung: **20.09.2023**
(21) Anmeldenummer: 21192587.0
(22) Anmeldetag: 23.08.2021
(51) Int. Cl.: B62H 3/00

(54) **E-SERVICE-MODUL**
E-SERVICE MODULE
MODULE DE SERVICE ÉLECTRONIQUE

(30) Priorität: 26.10.2020 DE 102020128116; 25.02.2021 DE 202021100946 U
(43) Veröffentlichungstag der Anmeldung: 27.04.2022
(73) Patentinhaber: Völkl Patente GmbH & Co. KG, 83052 Bruckmühl (DE); Martin, Andreas, 85540 Haar (DE); Wildgruber, Helmut, 85250 Altomünster (DE); Drössler, Stefan, 86559 Adelzhausen (DE)
(72) Erfinder: Martin, Andreas, Haar (DE); Helmut, Wildgruber, Altomünster (DE); Drössler, Stefan, Adelzhausen (DE); Völkl, Thomas, 83052 Bruckmühl (DE)
(74) Vertreter: Weickmann & Weickmann PartmbB

(56) Entgegenhaltungen:
- WO-A1-2015/162310
- CN-U- 206 734 273
- CN-U- 207 550 362
- CN-U- 207 617 857
- CN-U- 208 380 187
- DE-U1-202013 000 637
- JP-A- H10 310 089
- JP-A- 2010 191 636
- KR-U- 20110 003 138
- US-A1- 2010 117 863
- US-A1- 2018 069 416
- US-A1- 2019 135 362

## Beschreibung

### I. Anwendungsgebiet

Die Erfindung betrifft ein E-Service-Modul für Fahrer von elektrisch angetriebenen oder unterstützten Zweirädern, aber auch für Fußgänger.

### II. Technischer Hintergrund

Im vor allem urbanen Bereich werden kürzere und mittlere Strecken zunehmend nicht mit dem Auto zurückgelegt - aufgrund Umweltproblematik, Parkplatzmangel und anderen Gründen - sondern zunehmend sowohl von Fahrrädern als auch elektrisch unterstützten oder nur elektrisch angetriebenen E-Zweirädern, wie E-Scootern (ohne Sitzfläche), E-Fahrrädern oder E-Rollern (mit Sitzfläche). Allerdings sind die Infrastruktur und die Organisationsformen für diese E-Zweiräder noch nicht optimal und weisen diverse Probleme auf.
- Mietbare E-Scooter werden nicht an zentralen Punkten, insbesondere Ladestationen, abgestellt, sondern irgendwo im öffentlichen Raum, und müssen von den Betreibern nachts per LKW eingesammelt, zu zentralen Ladestationen verbracht, geladen und morgens wieder im Stadtgebiet verteilt werden.
- Teilweise gilt dies auch für mietbare E-Zweiräder, jedoch ist bei E-Zweirädern der Anteil im Privatbesitz befindlicher E-Zweiräder wesentlich größer als bei den E-Scootern.
- Darüber hinaus wird in Zukunft der Anteil von E-Rollern - worunter für die Zwecke der vorliegenden Anmeldung auch E-Mopeds fallen sollen - stark zunehmen, die keinerlei Tret-Unterstützung durch den Fahrer benötigen, sondern rein elektrisch angetrieben werden, und bei denen sich in Zukunft ebenfalls der überwiegende Teil im Privatbesitz befinden wird.

Für die Benutzer gerade privater E-Zweiräder besteht das Problem, dass diese aufgrund ihres hohen Kaufpreises sicher aufbewahrt werden sollen, und zwar nicht nur in der heimischen Garage oder im Fahrradkeller, sondern auch am Zielpunkt der Fahrt im öffentlichen Raum, an dem der Benutzer häufig in ein anderes Transportmittel, wie etwa einen Zug oder eine U-Bahn umsteigt.

Zusätzlich sollte dort eine Lademöglichkeit vorhanden sein.

Ein weiteres Problem ist die bei der Benutzung von E-Zweirädern, vor allem bei nicht durchgängig sommerlichem Wetter benötigte Bekleidung wie Helm, Jacke, Handschuhe, die nur während der Fahrt mit dem E-Zweirad benötigt wird, bei Beenden der Fahrt aber möglichst zusammen mit dem E-Zweirad sicher deponiert werden soll. Dies ist bei E-Rollern teilweise möglich in daran befestigten Aufbewahrungsfächern wie einem aufgebauten Top-Case oder einem Aufbewahrungsraum unter der Sitzbank, bei E-Zweirädern jedoch nicht üblich und auch nicht wirklich sicher anbringbar.

Zusätzlich sind solche Bekleidungsstücke während der Fahrt auch manchmal nass geworden, und sollen in geschlossenen Behältnissen nicht nass über längere Zeit aufbewahrt werden.

Umgekehrt benötigt ein potenzieller Zweirad-Fahrer, der ein anderes Verkehrsmittel verlässt und mit einem geliehenen Zweirad, insbesondere E-Zweirad, weiterfahren will, an der Wechselstelle die nötige Ausrüstung, beispielsweise einen Helm.

Auch die Bedürfnisse der Fußgänger sind im öffentlichen Raum nicht vollständig erfüllt:
So benötigen die in die Innenstadt zum Einkaufen mit öffentlichen Verkehrsmitteln angereisten Umland-Bewohner eine Möglichkeit, bereits erworbene Waren bis zur Rückfahrt deponieren zu können, beispielsweise in einem Schließfach.

Jedoch wurden Schließfach-Anlagen an zentralen verkehrsreichen Punkten, wie Bahnhöfen und U-Bahn-Stationen, insbesondere im Untergrund, schon vor längerer Zeit abgeschafft wegen der Gefahr der Deponierung einer Bombe in einem solchen Schließfach.

Bekannt sind bisher Fahrradständer oder zu großen Fahrrad-Parkhäusern zusammengesetzte Fahrrad-Ständer, in denen Fahrräder, aber auch E-Fahrräder, abgestellt und verschlossen, insbesondere mit dem Fahrrad-Ständerfest verbunden, werden können. Dokument WO 2015/162310 A1 offenbart den Oberbegriff des Anspruchs 1.

### III. Darstellung der Erfindung

### a) Technische Aufgabe

Es ist daher die Aufgabe der vorliegenden Erfindung, gerade den Fahrern von Zweirädern, insbesondere E-Zweirädern, ein E-Service-Modul zur Verfügung zu stellen, welches vielfach und auf einfache Art und Weise im öffentlichen Raum platziert werden kann und sowohl die Bedürfnisse von E-Zweirad-Fahrern befriedigt, als auch für Fußgänger Vorteile bietet.

### b) Lösung der Aufgabe

Diese Aufgabe wird durch die Merkmale des Anspruchs 1 1 gelöst. Vorteilhafte Ausführungsformen ergeben sich aus den Unteransprüchen.

Ein erfindungsgemäßes E-Service-Modul umfasst neben Zweirad-Ständern mit einer Abschließ-Möglichkeit für das Zweirad, insbesondere einer Anschließ-Möglichkeit des Zweirades am Zweirad-Ständer oder einem anderen Teil des E-Service-Moduls, die wie bekannt in einem gebäudeartigen Grundgestell mit aufrechten Tragsäulen und einem Dach angeordnet sein können, zunächst jedem Zweirad-Ständer zugeordnet, vorzugsweise räumlich zugeordnet, einen E-Ladeanschluss, um den Akku des im Zweirad-Ständer aufbewahrten E-Zweirades während der Aufbewahrungszeit wieder nachladen zu können.

Jedem Zweirad-Ständer, insbesondere jedem Zweirad-Ständer für ein Sitz-Zweirad wie ein Fahrrad oder einen Scooter, insbesondere einem E-Fahrrad oder E-Scooter oder E-Roller ist ein Fahrer-Schließfach zugeordnet, in dem der Fahrer während der Aufbewahrungszeit seines Zweirades nicht benötigte Gegenstände wie Helm, Jacke, Handschuhe und / oder andere Gegenstände aufbewahren kann.

Das Fahrer-Schließfach und/oder der E-Ladeanschluss ist dem jeweiligen Zweirad-Ständer vorzugsweise räumlich so zugeordnet, dass der Fahrer an der Position, von der aus er das Zweirad in diesen Zweirad-Ständer einschiebt oder aus diesem entnimmt, auch das Fahrer-Schließfach erreichen und Befüllen oder Entleeren kann.

Erfindungsgemäß ist der Ladeanschluss und/oder die Abschließvorrichtung für das Fahrrad im zugeordneten Fahrer-Schließfach angeordnet, die auch wirkverbunden sein sollten, sodass beispielsweise nach Öffnen der Abstiegs-Vorrichtung auch das Fahrer-Schließfach nicht mehr verschlossen ist und umgekehrt. Beispielsweise kann die Abschließ-Vorrichtung ein Stahlseil sein, welches vom Fahrer-Schließfach aus - in dem es fest am beispielsweise Grundgestells E-Service-Moduls befestigt ist - durch eine kleine Öffnung oder Nut nach unten aus dem Fahrer-Schließfach heraus und durch Teile des Zweirades geführt und oben im Fahrer-Schließfach wieder eingehängt werden, wenn sich das Fahrer-Schließfach wie bevorzugt direkt oberhalb des Zweirad-Ständers befindet.

Auch der E-Ladeanschluss kann unterschiedlich gestaltet sein:
Im einfachsten Fall besteht dieser aus einer elektrischen Steckdose im Inneren des Fahrer-Schließfaches, von der aus der Fahrer über ein Ladekabel die Verbindung mit dem Akku in seinem Zweirad, welches im Zweirad-Ständer steht, herstellen muss.

Entweder muss der Fahrer hierfür selbst ein Ladekabel dabei haben, oder im Fahrer-Schließfach ist ein Universal-Ladekabel vorhanden, beispielsweise ausgestattet mit mehreren unterschiedlich gestalteten Steckern am zweiradseitigen Ende entsprechend der gängigen Boxen-Formen an E-Zweirädern.

Im Fahrer-Schließfach kann auch ein mit dem Stromnetz verbunden ist Ladeschale vorhanden sein, in welche der Fahrer den Akku, den er aus seinem E-Zweirad entnommen hat, zum Nachladen einsteckt. Auch hier müsste es sich vorzugsweise um eine Universal-Ladeschale mit verschiedenen Adaptern zum Anstecken der verschiedenen Arten von Akkus handeln.

Vorzugsweise ist zumindest ein Teil des Fahrer-Schließfaches beheizbar, beispielsweise durch einen elektrisch betriebenen Heizlüfter oder wird automatisch durch ein darin befindliches elektrisches Ladegerät erwärmt, sodass darin aufbewahrte Gegenstände wie etwa Handschuhe oder eine Jacke dabei getrocknet werden. Hierfür besitzt das Fahrer-Schließfach Lüftungs-Öffnungen, beispielsweise an seiner Rückseite oder Oberseite, denn es befindet sich unter dem Dach des E-Service-Moduls.

Dabei bedeckt das Dach vorzugsweise nicht nur die Fläche, in der die Zweirad-Ständer angeordnet sind, sondern vorzugsweise auch die Betriebsfläche davor, auf der sich ein Fahrer aufhält, wenn er ein Zweirad in den Zweirad-Ständer einbringt und dort versperrt oder aus diesem entnimmt.

Auf dem Dach und/oder den Seitenflächen oder der Rückwand des E-Service-Moduls können Fotovoltaik-Elemente vorhanden sein, deren Strom zum Nachladen der E-Zweiräder verwendet werden kann, beispielsweise unter Verwendung einer im E-Zweirad-Modul vorhandenen Puffer-Batterie.

Alternativ kann das Dach auch begrünt sein mit Pflanzen.

Wie bekannt sind die Zweirad-Ständer vorzugsweise entlang einer Längsseite im Inneren eines solchen gebäudeartigen Grundgestells nebeneinander aufgereiht.

Ein solches E-Service-Modul wird also zum einen von Besitzern von E-Zweirädern benutzt werden, um diese an einem Umstiegs-Punkt in ein anderes Verkehrsmittel oder in der Nähe einer Einkaufsstraße sicher abzustellen und ggfs. nachzutanken.

Ein solches E-Service-Modul kann jedoch auch benutzt werden als Sammelstelle und Nachlade-Stelle und Entleihstation für ausleihbare E-Zweiräder, insbesondere E-Scooter, die bei Rückgabe in einem solchen Service-Modul und Einstellen in dessen Zweirad-Ständer nachgeladen werden können, insbesondere automatisch allein schon durch das Einstellen in den Zweirad-Ständer mit dem E-Lade-anschluss verbunden und automatisch nachgeladen werden, sodass die Betreiber auf das zeit- und kostenintensive nächtliche Einsammeln der E-Skooter zum Zwecke des Nachladens verzichten können. Die potenziellen Entleiher haben den Vorteil, dass sie an einem solchen Service-Modul in der Regel zuverlässig einen entleihbares, geladenes E-Zweirad wie einen E-Scooter zum Entleihen vorfinden, und bei Bedarf dort auch z.B. einen Helm erhalten können.

Vorzugsweise umfasst das E-Service-Modul nämlich auch einen Ausgabe-Automaten mit einem Ausgabefach, über den von Fahrern benötigte Gegenstände wie ein Helm und/oder Helm-Innenpolster käuflich erworben oder auch nur ausgeliehen werden können, sodass der potenzielle Entleiher diese Gegenstände nicht ständig mit sich führen muss für den späteren Gebrauch bei einem zu entleihenden z.B. E-Scooter.

In diesem Zusammenhang ist es beispielsweise möglich, einen Helm gegen Gebühr und Identifikation auszuleihen. Dagegen sollten die - meist mittels Klettverschluss in den Innenflächen des Helms zu befestigenden - Innenpolster, welche nicht nur der Aufnahme von Schweiß, sondern auch der Größenanpassung dienen können, aus hygienischen Gründen käuflich zu erwerben sein, um nicht mit Flächen des Helms in Berührung zu kommen, die der vorherige Benutzer verschmutzt hat.

Vorzugsweise weist ein solches E-Service-Modul auch sogenannte Fußgänger-Schließfächer auf, die im Gegensatz zu den Fahrer-Schließfächern weder einen E-Ladeanschluss noch eine Schließvorrichtung zum Verschließen eines Zweirades benötigen, sondern lediglich zur Aufbewahrung für momentan nicht benötigte Gegenstände, beispielsweise zwischenzeitlich getätigte Einkäufe, dienen und damit auch für auch Nicht-Zweirad-Fahrer und Fußgänger vorteilhaft sind.

Ein solches Fußgänger-Schließfach kann auch als Depot-Fach zum Ablegen einer Lieferung oder eines Paketes durch einen Paket-Logistiker oder Lebensmittel-Lieferdienst dienen, aus dem sich der Besteller bei seiner Rückkehr zu dem E-Service-Modul die gelieferten Waren entnehmen kann. Wenn das Fußgänger-Schließfach zusätzlich gekühlt ist, können auch frische Lebensmittel problemlos darin deponiert werden. Wenn das Fußgänger-Schließfach zusätzlich beheizbar ist, können darin abgelegte, heiß zu verzehrende Lebensmittel, entweder warmgehalten oder erst zu einer, insbesondere vom Kunden und späteren Entnehmer, vorgegebenen Zeit auf Verzehrtemperatur aufgeheizt werden, beispielsweise eine gekühlte oder tiefgekühlte rohe Pizza darin gebacken werden, beispielsweise mittels darin befindlicher Infrarot-Wärmelampen.

Dabei muss ein solches als Back-Fach ausgebildetes Fußgänger-Schließfach nicht nur jeweils mit einem Gericht wie einer Pizza vorab bestückt sein, sondern es kann ein neben oder über diesem Back-Fach vorhandenes Fußgänger-Schließfach als Vorrat und Ausgabeautomat für solche rohen Lebensmittel verwendet werden, aus dem mittels der Bedienen Einheit der Kunde eines davon auswählt, welches daraufhin automatisch in das Back-Fach gelangt, dort gebacken und anschließend an den Kunden ausgegeben wird.

Ein solches Fußgänger-Schließfach kann auch als Ausgabefach eines Automaten für auszuleihende oder zu verkaufende Gegenstände, wie etwa ein Schutz-Stirnband oder einen Helm oder für einen Helm verwendbare und darin befestigbare Kopf-Anlagepolster, dienen und besitzt dann vorzugsweise eine durchsichtige Fronttür.

Ein solches E-Service-Modul besitzt in aller Regel ein Bedien-Modul, vorzugsweise mit einer Bedien-Einheit, die beispielsweise ein Display zum Anzeigen von Informationen oder Anweisungen aufweist sowie eine Eingabe-Einheit, sei es eine Tastatur oder ein berührungsempfindlicher Bildschirm und/oder ein Mikrofon.

Vorzugsweise weist die Bedien-Einheit auch eine Bezahl-Einheit auf wie etwa einen Karten-Leser, um bezahlte Dienstleistungen wie etwa eine Bezahlung für das Benutzen des Fahrradständers oder ein auszuleihendes E-Fahrrad bezahlen zu können, sich identifizieren zu können oder einen Gegenstand wie einen Helm oder Innenpolster erwerben oder ausleihen zu können.

Die Bedien-Einheit kann jedoch eine Vielzahl weiterer Elemente umfassen:
Beispielsweise ein Navigations-Programm und/oder eine bildliche Darstellung der näheren Umgebung des E-Service-Moduls.

Des Weiteren einen Notfall-Knopf, über den ein Benutzer des Service-Moduls Hilfe anfordern kann, beispielsweise, weil er bedroht oder angegriffen wird oder das Service-Modul nicht funktioniert.

Des Weiteren kann die Bedien-Einheit und/oder das gesamte E-Service-Modul eine Beleuchtungs-Einheit aufweisen, mit denen das E-Service-Modul so gut beleuchtet ist, dass zumindest innerhalb des Grundgestells genug Licht vorhanden ist, um das E-Service-Modul zu nutzen, also ein Zweirad einzustellen und abzuschließen im Zweirad-Ständer oder zu entnehmen usw. Vorzugsweise ist die Beleuchtung mit einem Bewegungsmelder ausgestattet.

Vorzugsweise ist weiter mindestens eine Kamera vorhanden, die zumindest das Innere des Service-Moduls filmt, vorzugsweise auch die nahe Umgebung, und die mit einem Sicherheitsdienst oder der Polizei verbunden ist, und vor allem bei Betätigen des Notfall-Knopfes der Sicherheitsdienst über die Kamera und ein ggfs. ebenfalls vorhandenes Mikrofon die Situation an dem E-Service-Modul sehen, hören und beurteilen kann.

Vorzugsweise ist ein Brandmelder vorhanden, vorzugsweise auch eine Lösch-Vorrichtung, um bei Rauch-Entwicklung oder übermäßiger Hitze-Entwicklung, wie sie vor allem durch die elektrische Ausstattung des E-Service-Moduls entstehen könnte, zu löschen oder zumindest ein Alarmsignal abzugeben an eine Sicherheitsfirma oder die Feuerwehr.

Zum gleichen Zweck kann das E-Service-Modul auch einen abgeschlossenen Feuerlöscher aufweisen, der aufgrund einer solchen Brandmeldung des Brandmelders freigegeben wird und für Umstehende zur Benutzung bereitsteht.

Die Service-Einheit kann auch eine Desinfektions-Vorrichtung umfassen, um von anderen Nutzern bereits gehandhabte Gegenstände oder Teile zu desinfizieren, seien es Griffe oder Sattel eines Zweirades, einen ausgeliehenen Helm oder ähnliches.

Die Desinfektions-Vorrichtung kann ein Spender für flüssiges Desinfektionsmittel umfassen oder auch ein Fach oder einen Raum, in dem desinfizierende Ultraviolett-Bestrahlung oder Ozon-Flutung durchgeführt werden kann.

So können beispielsweise alle Ausgabefächer und/oder alle Schließfächer, in denen private Gegenstände deponiert oder ausleihbare Gegenstände vorgehalten werden, mit einer solchen Ultraviolett-Bestrahlung oder Ozon-Flutung ausgestattet sein.

Die Fußgänger-Schließfächer sind, vorzugsweise zusammen mit der Bedien-Einheit, vorzugsweise als ein Stirnseiten-Modul ausgebildet, welches an die Stirnseite eines E-Service-Moduls passt, von denen mehrere in Längsrichtung hintereinander aufgereiht werden können und sowohl elektrisch als auch hinsichtlich der Verwendung einer einzigen Bedien-Einheit gekoppelt werden können.

Auch Scooter-Ständer, vorzugsweise in mehreren Ebenen übereinander, können als ein Stirnseiten-Modul ausgebildet sein, sodass dann an einer Reihe solcher Module stirnseitig jeweils ein Stirnseiten-Modul vorgesehen werden kann, wovon vorzugsweise eines eine Bedienen-Einheit umfasst.

Hinsichtlich der Art der aufzunehmenden Zweiräder, insbesondere E-Zweiräder - ohne Elektroantrieb-Unterstützung ausgestattete normale Fahrräder werden bereits aus Kostengründen eher einen normalen Fahrradständer nutzen - muss hinsichtlich des Fahrrad-Ständers primär unterschieden werden zwischen Sitz-Zweirädern wie Fahrrädern und Rollern und über keinen Sitz verfügende Zweiräder, insbesondere Scooter, jeweils in der E-Version.

E-Fahrräder und E-Roller sollten vorzugsweise in die gleichen Zweirad-Ständer passen. Das Problem der unterschiedlich breiten Reifen kann dadurch gelöst werden, dass die unteren Führungs-Schienen oder Einstell-Schienen der Zweirad-Ständer einen V-förmigen Querschnitt besitzen und damit sowohl schmale Reifen von Fahrrädern als auch breite Reifen von Rollern aufnehmen können sollten.

Eine Aufbewahrung von E-Fahrrädern oder E-Rollern ist aus Gewichtsgründen nicht möglich, sofern hierfür das entsprechende Fahrzeug vom Fahrer vollständig hochgehoben werden müsste.

Bei versetzten Zweirad-Ständern, bei denen bei jedem zweiten die Position des Vorderrades erhöht ist, könnte wahrscheinlich auch der Fahrer eines E-Fahrrades oder E-Rollers das Vorderrad ausreichend weit anheben. Er ist jedoch auch frei, nur die Zweirad-Ständer mit nicht erhöhter Vorderrad-Position zu nutzen, während die erhöhten Zweirad-Ständer wohl nur von E-Scootern besetzt werden würden.

Eine Aufbewahrung in zwei Ebenen übereinander wäre möglich mit einer motorisch betriebenen Hub-Vorrichtung für einen Teil der Zweirad-Ständer, was den baulichen Aufwand für ein solches Service-Modul jedoch stark erhöht.

Eine solche Hub-Vorrichtung zwecks Aufbewahrung in zwei Ebenen ist dagegen für Zweirad-Ständer für E-Scooter sinnvoll, da diese nur ein relativ geringes Gewicht besitzen und damit eine Hub-Vorrichtung, die eine Anzahl von mit E-Scootern besetzen Zweirad-Ständern motorisch hochheben können soll, nicht allzu stabil ausgebildet sein muss.

Dabei ist dies vorzugsweise so gestaltet, dass die untere Einheit mit Zweirad-Ständern nur dann zugänglich ist, wenn die obere Einheit gefüllt und angehoben ist, was vorzugsweise von der Steuerung der Bedien-Einheit veranlasst wird.

Um den Strom für die E-Ladestellen zur Verfügung zu stellen, können die E-Service-Module natürlich ans öffentliche Stromnetz angeschlossen sein.

Vorzugsweise besitzen sie jedoch auf dem Dach oder an den Seitenflächen eigene Photovoltaik-Elemente, mit denen sie Strom erzeugen, die in einer Puffer-Batterie des E-Service-Moduls zwischengespeichert wird und bei Bedarf über den E-Lade-Anschluss an ein E-Zweirad abgegeben wird. Auf diese Art und Weise können die E-Service-Module autark und unabhängig vom öffentlichen Stromnetz betrieben und eingesetzt werden.

Die Service-Module sind nach dem Baukasten-Prinzip in unterschiedlichen Formen, Ausstattungsvarianten und Größen herstellbar aus einer relativ geringen Anzahl unterschiedlicher Baukasten-Teile:
Bereits die Grundgestelle von einem Haupt-Modul, dessen Längserstreckung größer ist als die eines stirnseitig daran passenden Stirnmoduls, können baukastenartig zusammengesetzt werden aus unterschiedlichen Sorten von aufrechten Stützen und unterschiedlichen Sorten, insbesondere Größen, von tragenden Dachkonstruktionen. Auf diesen können unterschiedliche Sorten von Dach-Belägen, beispielsweise Solarpaneele einerseits oder mit Pflanzen wie Gras oder Kräutern bewachsene Begrünungs-Einheiten andererseits, als Baukasten-Teile aufgelegt werden.

Darüber hinaus können an die Abmessungen dieser Bauteile angepasste Rückwände und/oder Seitenwände Teile des Baukastens sein.

Für die Ausstattung der einzelnen Module stehen unterschiedliche Zweirad-Ständer oder Zweirad-Ständer-Einheiten zur Verfügung, die geeignet sind beispielsweise einerseits zum Aufnehmen von Sitz-Zweirädern und andererseits von Scooter, und die sich darüber hinaus in der Anzahl ihrer Zweirad-Ständer sowie ihrem grundsätzlichen Aufbau (zum Beispiel einstöckig oder mehrstöckig) unterscheiden.

Ferner kann eine oder mehrere Sorten von sowohl Fahrer-Schließfächern und/oder Fußgänger-Schließfächern Baukasten-Teile sein.

Die einzelnen Module weisen Verbindungsvorrichtungen sowohl zu mechanischen verbinden, beispielsweise mehrere Haupt-Module in Reihe, als auch zum elektrischen Verbinden auf, sodass insbesondere mit einer DIN Einheit ein ganzes Service-Modul bedient und gesteuert werden kann, welches beispielsweise aus mehreren Hauptmodulen sowie 2 Stirnmodulen besteht.

### c) Ausführungsbeispiele

Ausführungsformen gemäß der Erfindung sind im Folgenden beispielhaft näher beschrieben. Es zeigen:
- **Fig. 1 a - c:**: eine erste, nur zur Aufnahme von Fahrrädern ausgebildete, Bauform eines Haupt-Moduls eines Service-Moduls in perspektivischer Ansicht sowie in Frontansicht und seitlicher Stellen Ansicht,
- **Figur 2a:**: eine zweite, teilweise zur Aufnahme von Scootern ausgebildete, Bauform eines Haupt-Moduls eines Service-Moduls in perspektivischer Ansicht,
- **Figur 2b:**: eine Schnittdarstellung betrachtet gemäß IIB - IIB in **Figur 2a****,**
- **Figur 2c, d:**: eine Hubvorrichtung zum verbringen der Scooter in die obere Parkposition in verschiedenen Funktionsstellungen,
- **Figur 3:**: eine dritte, ausschließlich zur Aufnahme von Scootern ausgebildete, Bauform eines Haupt-Moduls eines Service-Moduls in perspektivischer Ansicht,
- **Figur 4a, b:**: ein aus einem Haupt-Modul gemäß der 1. Bauform sowie zwei Stirn-Modulen zusammengesetztes Service-Modul in zwei verschiedenen perspektivischen Ansichten,
- **Figur 5:**: eines der beiden Stirn-Module gemäß Figur 4a, b perspektivischer Ansicht,
- **Figur 6:**: das andere der beiden Stirn-Module gemäß **Figur 4a**, b betrachtet in dessen Frontansicht, der seitlichen Stirn-Ansicht des ServiceModuls gemäß **Figur 4a****, b.**

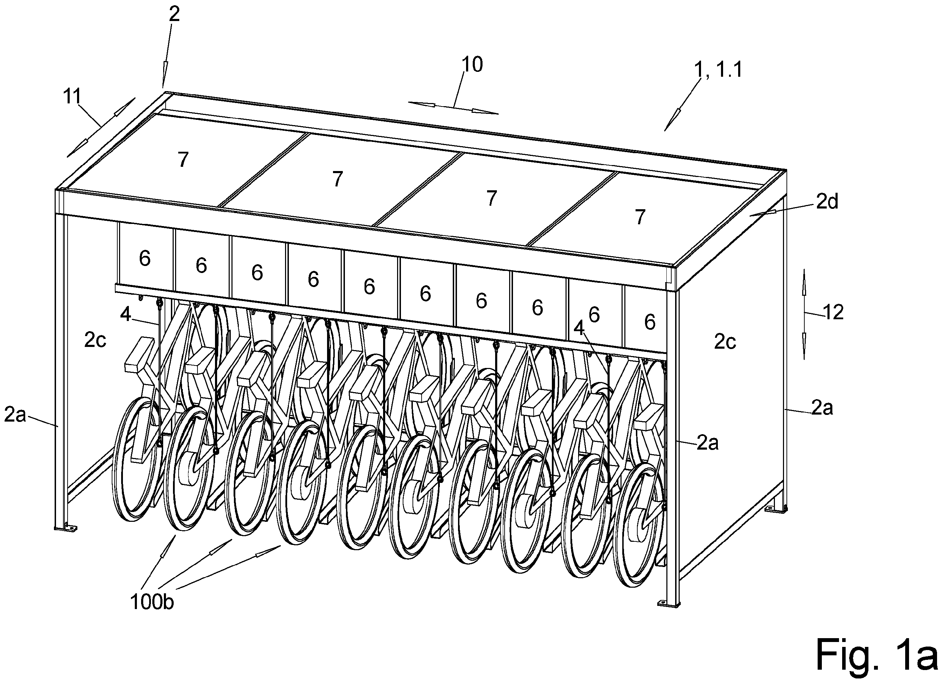

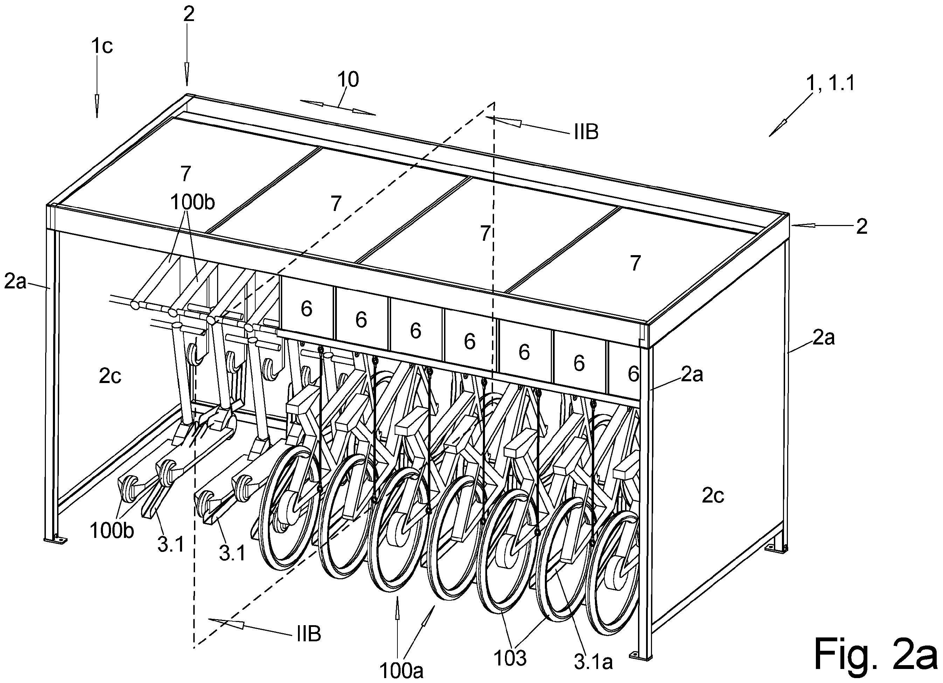

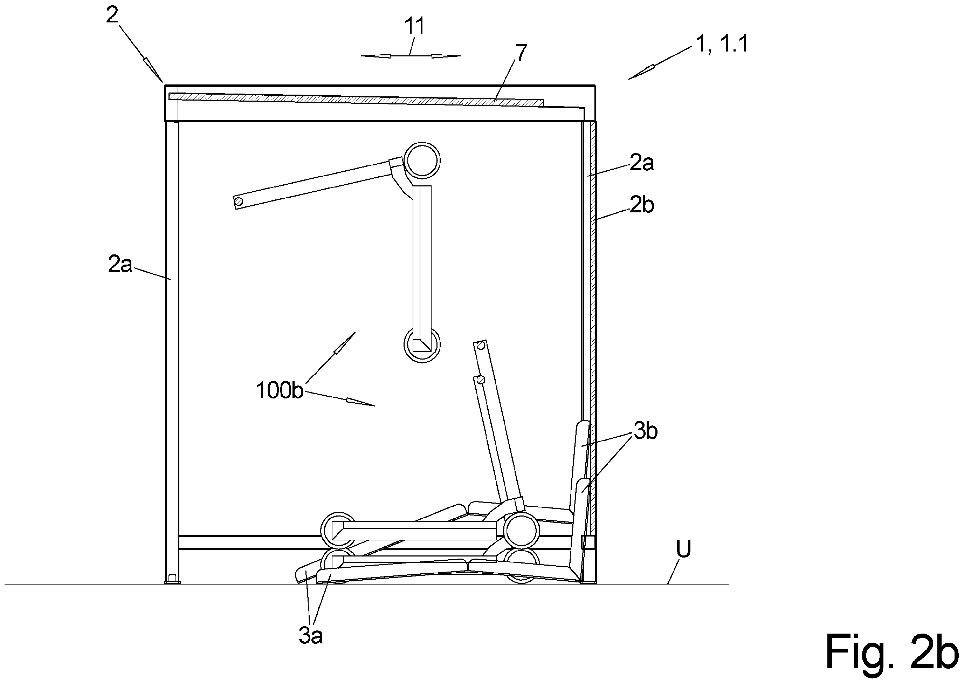

Ein erfindungsgemäßes Service-Modul 1 kann aus nur einem Haupt-Modul 1a bestehen, wie in den **Figuren 1a** **- c** oder den **Figuren 2a****, b** dargestellt.

Ein solches Haupt-Modul 1.1 umfasst zum einen ein gebäudeartiges Grundgestell 2 bestehend zumindest aus einem in diesem Fall etwa horizontalen Dach 2d, welches in der Aufsicht betrachtet in diesem Fall länglich rechteckig ist, und an seinen Ecken auf aufrechten, in der Vertikalen 12 verlaufenden, Stützen 2a aufgeständert 100 ist.

Die in der Aufsicht betrachtet in Längsrichtung 10 verlaufende längere Seite oder bei anderer Grundform längste Seite wird als Frontseite 1a bezeichnet, die gegenüberliegende Seite als Rückseite 1b und die dazwischenliegenden, in Tiefenrichtung 11 verlaufenden, Schmalseiten als Stirnseiten 1c, wobei in diesem Fall die beiden Stirnseiten durch zwischen den aufrechten Stützen 2a befestigte, plattenförmige Stirnwände 2c bis fast auf den Untergrund herab verschlossen sind, und ebenso die Rückseite 1b durch eine zwischen den hinteren aufrechten Stützen 2a montierte Rückwand 2b.

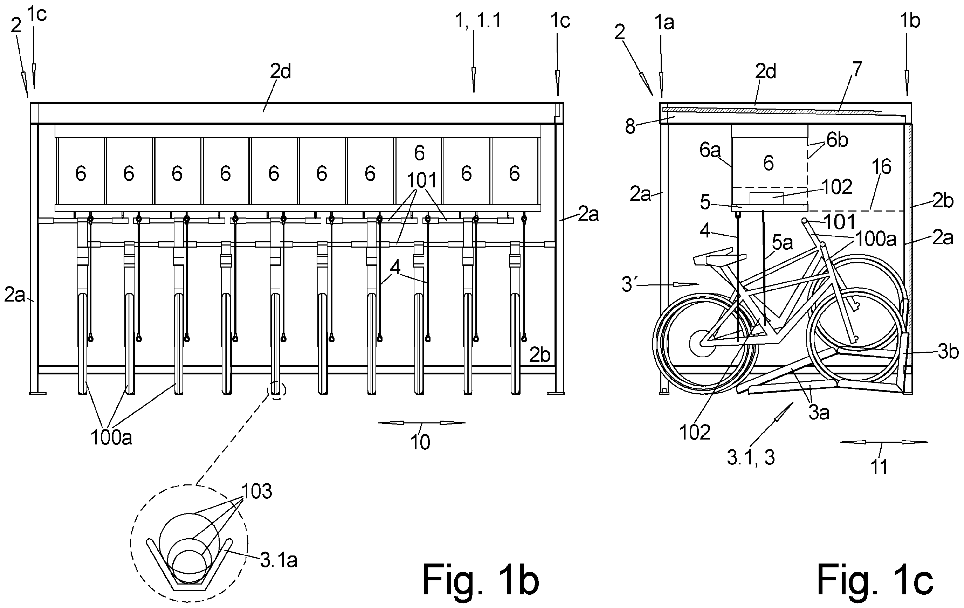

Von der Frontseite 1a her, also von vorne, ist das Grundgestell 2 offen und die darin abzustellenden E-Zweiräder 100 - im Folgenden kurz meistens nur Zweiräder 100 genannt - werden von dieser Frontseite 1a her in einer Einschieberichtung 3' - siehe **Figur 1c** - in das Grundgestell 2 in einen dort für ein Zweirad 100 vorhandenen Zweirad-Ständer 3 eingestellt und darin formschlüssig aufrecht stehend aufgenommen, wobei die Tiefe des Grundgestells 2 annähernd oder sogar mehr als der Länge eines Zweirades 100, insbesondere Fahrrades 100a, entspricht.

Von einem solchen Haupt-Modul 1.1 können mehrere in der Frontansicht nebeneinander, also in ihrer Längsrichtung 10, zur Kapazitätsvergrößerung hintereinander gestellt werden und/oder an eines seiner Stirnflächen 1c kann ein Stirn-Modul 1.1 angestellt werden, wie später erläutert wird.

Das Haupt-Modul 1.1 gemäß der **Figuren 1a** **- c** ist ausschließlich zur Aufnahme von sogenannten Sitz-Zweirädern 100a, vorzugsweise E-Sitz-Zweirädern 100a, also den hier dargestellten Fahrrädern 100a oder auch nicht dargestellten Rollern mit Sitzfläche, vorgesehen.

Damit eine enge Anordnung der Fahrräder 100a möglich ist und dennoch sich die relativ weit seitlich auskragenden Lenker 101 nicht gegenseitig verhaken, sind die in Längsrichtung 10 aufeinanderfolgend angeordneten Zweirad-Ständer, hier die Fahrrad-Ständer 3.1, so ausgebildet, dass die in Längsrichtung 50 benachbart abgestellten Fahrräder 100a - wie von konventionellen Fahrrad-Ständern bekannt -mit dem Vorderrad abwechselnd in einer tiefen und einer höheren Abstellposition aufgenommen sind.

Der Fahrrad-Ständer 3.1 umfasst jeweils eine untere etwa horizontal verlaufende, rinnenförmige Einfahr-Schiene 3a und eine an oder nahe der Rückwand 2d vorhandene Front-Aufnahme 3b, die ebenfalls rinnenförmig ausgebildet sein kann. Die Einfahr-Schienen 3a sind abwechselnd im Anfangsbereich etwa horizontal verlaufend oder im Anfangsbereich nach oben gerichtet, wodurch sich die unterschiedlich hohen Abstellpositionen ergeben.

Da diese Einfahr-Schienen 3a, insbesondere auch die Front-Aufnahme 3b, im Querschnitt betrachtet vorzugsweise V-förmig gestaltet sind, wie in **Figur 1b** vergrößert dargestellt, können darin Reifen 103 mit sehr unterschiedlich großen Durchmessern, nämlich der Reifen 103 von normalen Straßen-Fahrrädern über Mountainbikes bis hin zu den Ballon-Reifen von Rollern, seitlich dennoch gut abgestützt aufgenommen werden

Während die bisher beschriebene Ausbildung des Haupt-Moduls 1.1 auch auf bekannte Fahrradständer zutrifft, ist erfindungsgemäß über jedem der Zweirad-Ständer, hier Fahrrad-Ständer 3.1, ein vom Benutzer verschließbares Fahrer-Schließfach 6 angeordnet, welches sich in einer solchen Höhe befindet, dass einerseits ein Fahrrad 100a mit seinem Lenker 101 problemlos darunter hindurchgeschoben werden kann in den Fahrrad-Ständer 3.1 und andererseits niedrig genug, damit ein an der Frontseite 1a stehender Benutzer die Front-Tür 6a oder Frontklappe des Fahrer-Schließfaches 6 öffnen und dessen Innenraum erreichen kann zum einerseits Deponieren von Fahrer-Utensilien wie Helm, Jacke oder Handschuhen.

Vorzugsweise ist die Frontseite des Fahrer-Schließfaches 6 von der Frontseite 1a des Haupt-Moduls 1 zurückversetzt aus Gründen des Witterungs-Schutzes.

Vor allem aber enthält das Fahrer-Schließfach 6 einen E-Ladeanschluss 5 zum Laden des Akku 102 des E-Zweirades.

In diesem Fall besteht der E-Ladeanschluss 5 aus einem aus dem jeweiligen Fahrer-Schließfach 6 nach unten herausführenden Ladekabel 5a, welches lang genug ist, um direkt am Ladeanschluss des darunter stehenden E-Zweirades 100, zum Beispiel des E-Fahrrades 100a, angesteckt zu werden.

Auf Wunsch kann der Benutzer jedoch das Ladekabel 5a vollständig im Inneren seines Fahrer-Schließfaches 6 belassen, und dort mit einem darin eingelegten, aus dem E-Zweirad 100 entnommenen, Akku 102 verbinden.

Gespeist wird der Lade-Anschluss 5 entweder aus dem örtlichen Stromnetz und/oder mithilfe von Fotovoltaik-Elementen 7, die auf der Oberseite des Daches 2d angeordnet sein können, wofür dann in aller Regel das Haupt-Modul 1 auch eine Puffer-Batterie 8 umfasst, die dann von den Fotovoltaik-Elementen 7 geladen gehalten wird.

Vorzugsweise umfasst der Ladeanschluss 5 im Fahrer-Schließfach 6 auch einen Spannungswandler, der sich erwärmt und dadurch das Innere des Fahrer-Schließfaches 6 beheizt, sodass die darin abgelegten Fahrer-Utensilien, die vorzugsweise auf einem Lochlech, welches horizontal über dem Spannungswandler verläuft, dadurch getrocknet werden.

Vorzugsweise sind hierfür an der Rückseite oder Oberseite des Fahrer-Schließfaches 6 Lüftungs-Öffnungen 6b vorgesehen.

Als Diebstahlschutz umfasst jeder Zweirad-Ständer 3 bzw. 3.1 auch eine Abschließ-Vorrichtung 4, in diesem Fall in Form eines flexiblen, schwer durchtrennbaren Seil 24 wie etwa einem Stahlseil 24, welches vom Fahrer-Schließfach 6 nach unten hängend am Rahmen des Zweirades 100, hier Fahrrades 100a, befestigt werden kann und mit seinem anderen, oberen Ende entweder am oder im Fahrer-Schließfach 6 oder dahinter am Grundgestell 2 nicht lösbar befestigt ist.

**Figur 2a** zeigt in einer perspektivischen Ansicht und **Figur 2b** in einer Schnittdarstellung daraus ein Haupt-Modul 1.1 einer zweiten Bauform, in welchem von der Frontseite 1a her nebeneinander in einem ersten Bereich wie bei der ersten Bauform gemäß der Figuren 1 Sitz-Zweiräder 100a, daneben in einem zweiten Bereich jedoch auch sitzlose Scooter 100b abgestellt und aufgenommen werden können.

Wenn in diesem zweiten Bereich Scooter 100b nur in einer unteren Ebene - in Längsrichtung 10 vorzugsweise wiederum abwechselnd zueinander höhenversetzt - aufgenommen werden sollen, werden hierfür vorzugsweise die gleichen Zweirad-Ständer 3.1, wie sie auch für Fahrräder verwendet werden, benutzt und im Grundgestell 2 angeordnet.

Dann können auch in diesem Fall darüber Fahrer-Schließfächer 6 - wiederum mit Lade-Anschluss 5 und Abschließ-Vorrichtung 4 - für den Scooter 100b, vorzugsweise einen E-Scooter 100b, vorgesehen werden. Dies ist wegen des Diebstahlschutzes vor allem für im Privatbesitz befindliche Scooter 100b von Interesse.

Da die Scooter 100b jedoch deutlich weniger wiegen als ein E-Fahrrad 100a, können gemäß **Figur 2b** Scooter 100b in zwei Ebenen übereinander aufbewahrt werden, wodurch doppelt so viele Scooter 100b auf gleicher Grundfläche untergebracht werden können.

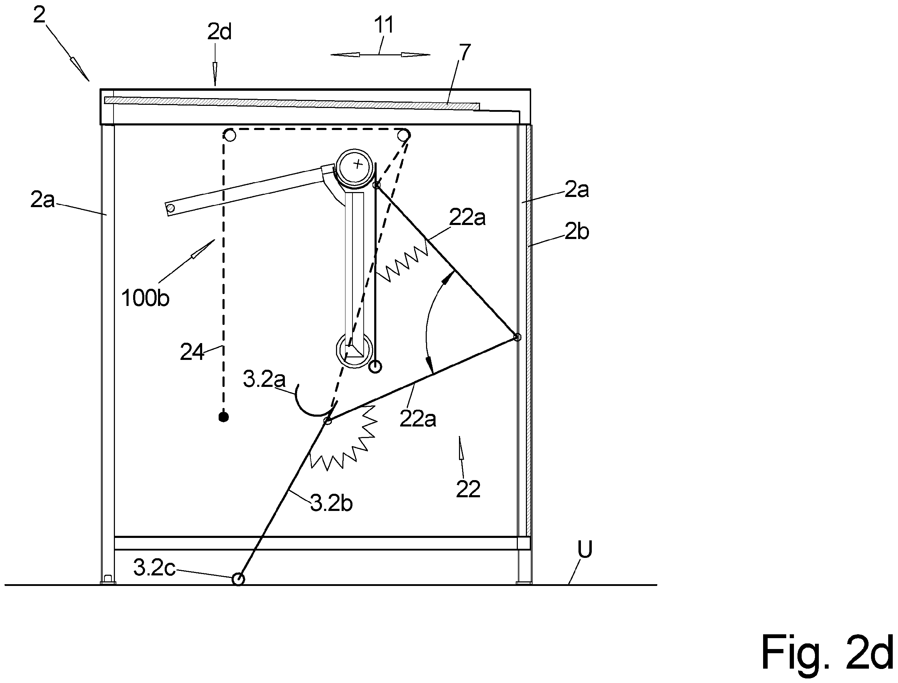

Zu diesem Zweck werden z.B. in der oberen Ebene die Scooter 100b in einem Scooter-Halter 3.2 mit ihrem Vorderrad aufgenommen, wobei die Trittfläche des Scooters 100b vertikal herabhängt und der Lenker etwa horizontal in Richtung Frontseite 1a abragt wie in **Figur 2d** dargestellt.

Der obere Scooter-Halter 3.2 ist dabei so hoch angeordnet, dass sich das Hinterrad des darin gehaltenen Scooters 100b vorzugsweise auf oder noch oberhalb der Lenker der in der unteren Ebene, vorzugsweise in den Fahrrad-Ständern 3.1, abgestellten Scootern 100b befindet, vorzugsweise in Tiefenrichtung 11 noch vor, also zur Frontseite 1a hin versetzt, den Lenkern der Scooter 100b in der unteren Ebene wie in **Figur 2b** erkennbar. Denn erfahrungsgemäß wird zuerst die untere Ebene gefüllt werden, da der Benutzer das Hochheben des Scooters 100b zu vermeiden versucht, und dadurch ist die obere Ebene auch bei gefüllter unterer Ebene noch zugänglich.

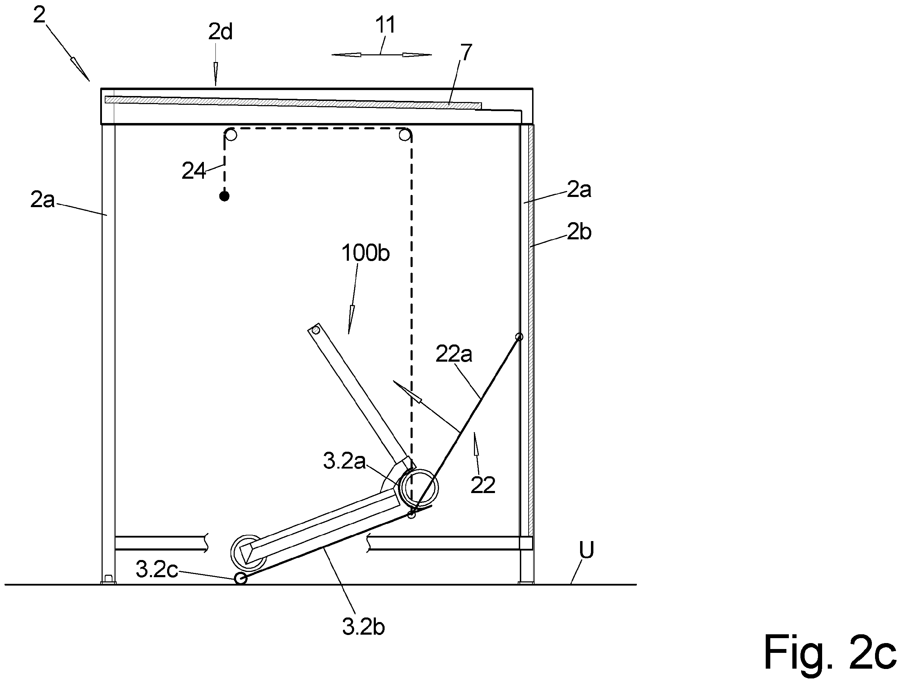

**Figur 2c** zeigt eine Lösung, bei der diese Scooter-Halter 3.2 Bestandteil einer Hubvorrichtung 22 sind und zwischen einer angehobenen, vorzugsweise hoch geschwenkten, Aufbewahrungsposition und einer abgesenkten, vorzugsweise nach unten geschwenkten, Ladeposition verlagert werden können. Dies kann für jeden Scooter-Halter 3.2 separat möglich sein, wobei das Hochschwenken nach Einstellen eines Scooters 100b vorzugsweise vom Benutzer selbst durchgeführt werden muss, zum Beispiel durch Zug an einem Seil 24.

Die Hubvorrichtung 22 kann jedoch auch für den gesamten Scooter-Bereich, also eine Mehrzahl nebeneinander in Längsrichtung 10 angeordnete Scooter-Halter 3.2 ausgebildet sein und wird dann vorzugsweise motorisch, insbesondere automatisch, durchgeführt, insbesondere erst wenn die betreffende Anzahl von daran vorhandenen Scooter-Haltern 3.2 mit Scootern gefüllt sind - was vorzugsweise bei Miet-Scootern der Fall sein wird - und/oder daraus Scooter 100b entnommen werden müssen.

Dabei ist der Scooter-Halter 3.2, in dem vorzugsweise das Vorderrad des Scooters 100b aufgenommen ist, oder die Mehrzahl dieser Scooter-Halter 3.2, an einem oder mehreren parallelen Schwenkarmen 22a gelenkig befestigt, der mit seinem unteren Ende beispielsweise an der Rückwand 2b des Grundgestells 2 befestigt sein kann.

Vorzugsweise umfasst der Scooter-Halter 3.2 außer der Vorderrad-Aufnahme 3.2a auch eine Hinterrad-Stütze 3.2b, die auch im hochgeschwenkten Zustand nicht senkrecht hängen muss, sondern mit ihrem unteren Ende schräg in Richtung Frontseite 1a weist und an ihrem unteren, von der Vorderrad-Aufnahme 3.2a abgewandten, Ende vorzugsweise eine Führungsrolle 3.2c aufweist.

Dadurch wird sichergestellt, dass beim Herabschwenken des Scooter-Halters 3.2 dieser zunächst mit dieser Führungsrolle 3.2c auf dem Untergrund aufsetzt und durch weiteres Absenken diese in Richtung Frontseite 1a verfährt und damit die Hinterrad-Stütze 3.2b zunehmend flacher wird bis hin zur Horizontalen und somit die darauf stehenden Scooter 100b in ihre Benutzungs-Lage verschwenkt werden für das Entnehmen, wie in **Figur 2c** dargestellt.

Diese Bauform des Scooter-Halters 3.2 insbesondere in der zweiten, oberen Aufnahme-Ebene eignet sich vor allem für Miet-Roller, denn dafür ist keine Diebstahlssicherung in Form einer Abschließ-Vorrichtung 4 notwendig.

Dagegen sollen auch diese Scooter-Ständer 3.2, vorzugsweise alle Scooter-Ständer 3.2, ebenfalls mit einem Lade-Anschluss 5 ausgestattet sein, um auch die Miet-Scooter 100b während der Aufbewahrungszeit im E-Service-Modul 1 elektrisch nachladen zu können, was gerade bei Miet-Scootern für deren Betreiber das nächtliche Einsammeln, Nachladen und Zurückbringen der Miet-Scooter 100b überflüssig macht.

Als Ladeanschluss 5 hängen vorzugsweise Ladekabel 5a in einer ausreichenden Menge und Länge vom Dach oder dem oberen Bereich der Rückwand des Scooter-Moduls, insbesondere Scooter-Stirnmoduls 1.2a, herab, vorzugsweise mit unterschiedlichen Stecker-Formen oder Adaptern zum Anschließen der unterschiedlichen Lade-Anschlüsse von unterschiedlichen E-Scooter-Modellen.

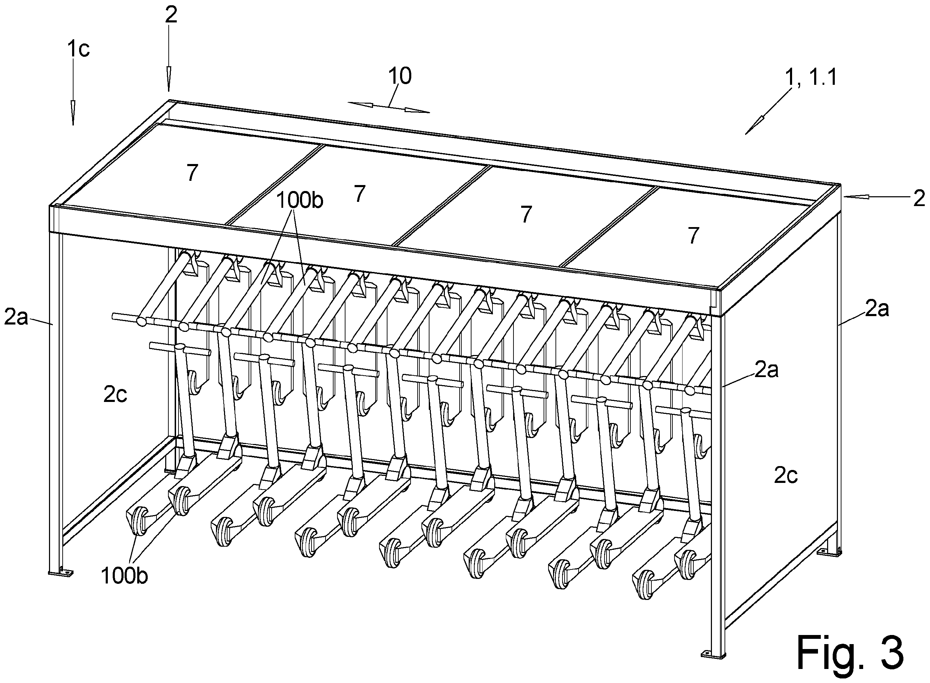

**Figur 3** zeigt die perspektivische Ansicht eines Haupt-Moduls 1.1, welches ausschließlich zur Aufnahme von Scootern 100b in zwei Aufnahme-Ebenen übereinander ausgebildet ist, und dementsprechend keine Fahrer-Schließfächer aufweist.

Je nach Anzahl der zu erwartenden abzustellenden Fahrräder 100a einerseits und Scooter 100b andererseits können also gemischte Haupt-Module 1.1 gemäß **Figur 2a**, b, dann vorzugsweise einzeln, aufgestellt und als E-Service-Modul 1 verwendet werden oder mehrere Haupt-Module 1.1 zur Aufnahme nur von Fahrrädern 100b wie in den **Figuren 1a bis 1c** einerseits und nur von Scootern 100b wie gemäß **Figur 3** andererseits in Längsrichtung 10 aneinandergereiht und/oder Rückseite an Rückseite aufgestellt werden.

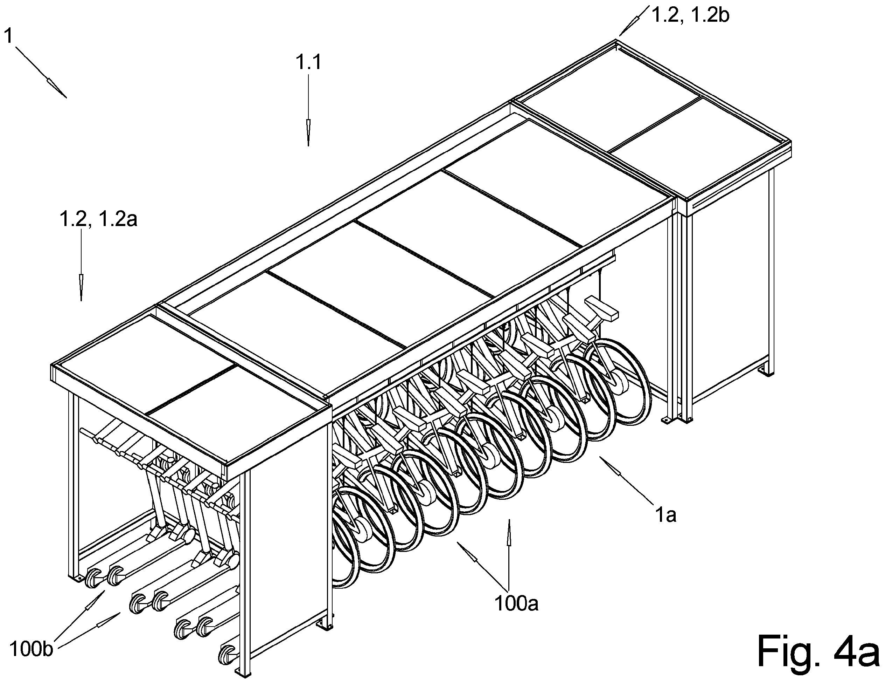

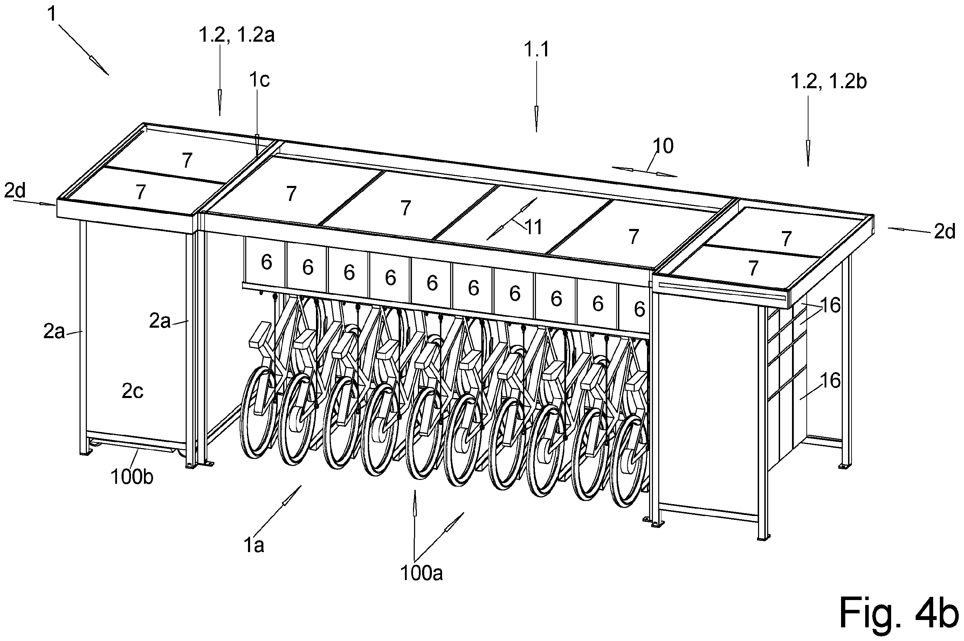

Die **Figuren 4a****, b** zeigen in verschiedenen perspektivischen Ansichten ein E-Service-Modul 1, welches aus mehreren Modulen zusammengesetzt ist, in diesem Fall einem Haupt-Modul 1.1 gemäß der ersten Bauform der **Figuren 1a** **bis c,** also zur Aufnahme ausschließlich von Fahrrädern 100a, an dessen Stirnflächen 1c jeweils ein Stirnmodul 1.2 angesetzt ist.

Auch die Stirn-Module 1.2 besitzen jeweils ein gebäudeartiges Grundgestell 2 mit einem von vertikal verlaufenden Stützen 2a getragenen Dach 2d - auf dem wiederum Fotovoltaik-Elemente 7 angebracht sein können - wobei die Seitenflächen der Stirn-Module 1.2 ebenfalls durch Seitenwände 2c verschlossen sein können.

Allerdings sind in der Aufsicht betrachtet die Stirn-Module 1.2 entlang ihrer offenen Frontseite nur etwa so lang wie die Stirnseite 1c eines Haupt-Moduls 1.1, sodass an jeder der Stirnseiten 1c bei Bedarf eines der Stirn-Module 1.2 angestellt werden kann ohne dass diese in Tiefenrichtung 11 des Haupt-Moduls 1.1 wesentlich über das Haupt-Modul 1.1 vorstehen.

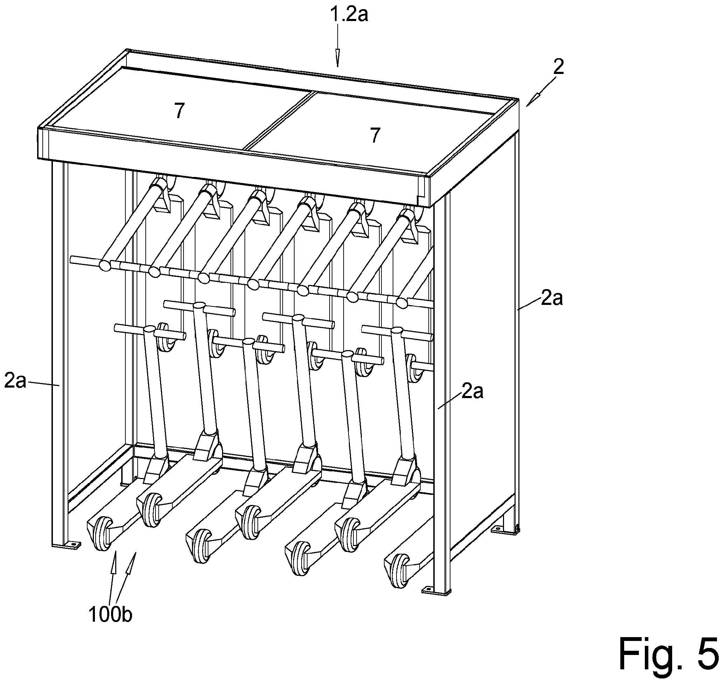

Betrachtet mit Blick auf die Frontseite 1a des Haupt-Moduls 1.1 ist an die linke Stirnfläche 1c ein Scooter-Stirnmodul 1.2a angesetzt, welches von seiner offenen Frontseite her zugängliche Scooter-Ständer 3.2 in zwei Ebenen übereinander aufweist, die aus Übersichtlichkeitsgründen in der **Figur 4a** und der Einzeldarstellung dieses Scooter-Stirnmoduls 1.2a in **Figur 5** nicht dargestellt sind, aber wie anhand der **Figur 2b** beschrieben ausgebildet sein können.

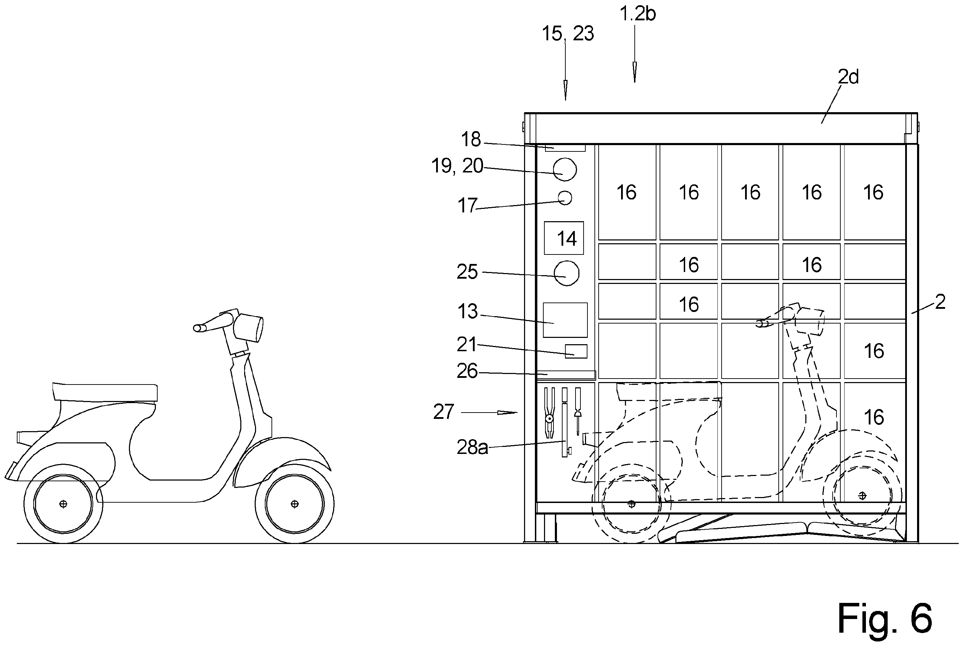

An der rechten Stirnseite des Haupt-Moduls 1.1 befindet sich dagegen ein Bedien-Stirnmodul 1.2b, wie in **Figur 6** in der Frontansicht dargestellt, welches vor allem der Bedienung der Zweiradständer 3, also der Fahrrad-Ständer 3.1 sowie der Scooter-Ständer 3.2, dient und welches zu diesem Zweck eine Bedien-Einheit 15 aufweist:
Da die Fahrer-Schließfächer 6 in der Regel kein von außen zugängliches Schloss aufweisen, sondern nur von einem innen liegenden Schließmechanismus aus geöffnet und verriegelt werden können, ist bereits hierfür eine Bedien-Einheit 15 notwendig, die in der Regel zusätzlich auch eine Bezahl-Einheit 21 für das Bezahlen des in der Regel nicht kostenlosen Abstell- und Aufbewahrung-Vorganges sowie gegebenenfalls des Nachladens des elektrischen Akku 102 durch den Benutzer aufweist.

Während die Bezahl-Einheit 21 in der Regel ein Kartenleser ist, umfasst die Bedien-Einheit 15 zumindest ein Display 14 und eine Eingabe-Einheit 13, beispielsweise in Form einer Tastatur oder eines berührungsempfindlichen Bildschirms.

Vorzugsweise ist am oberen Ende der Bedien-Einheit 15 eine Beleuchtungs-Einheit 18 vorhanden, damit die einzelnen Bedienelemente gut erkannt werden können, sowie aus Sicherheitsgründen eine Kamera 20, die den Bereich vor der Bedien-Einheit 15 im Blick hat sowie meist auch ein Mikrofon 19 und gegebenenfalls ein Lautsprecher 25, um auch akustisch mit einer entfernten Leitstelle in Verbindung treten zu können.

Ferner ist in aller Regel ein Notfallknopf 17 vorhanden, der vom Benutzer gedrückt werden kann, um bei Nicht-Funktion der Bedien-Einheit 15 reagieren zu können und/oder aufgrund einer gefährlichen Situation schnell Kontakt mit einem Sicherheitsdienst oder der Polizei aufnehmen zu können.

Die Bedien-Einheit 15 kann ferner technische Hilfsmittel umfassen, beispielsweise Werkzeuge 27 wie Schraubendreher und Zange - die vorzugsweise an der Bedien-Einheit 15 angekettet sind - sowie eine Luftpumpe 28, vorzugsweise in Form eines Luftschlauches 28a, der aus der Bedien-Einheit 15 hängt und von einem darin angeordneten Kompressor mit Druckluft gespeist wird.

Da die Bedien-Einheit 15 nur einen kleinen Teil der Frontfläche eines solchen Stirn-Moduls 1.2 benötigt, kann der Rest der Frontfläche wie dargestellt für sogenannte Fußgänger-Schließfächer 16 verwendet werden.

Diese Fußgänger-Schließfächer 16 können unterschiedlichen Zwecken dienen,
- entweder dem Deponieren von eingekauften Waren durch einen vorbeikommenden Fußgänger,
- oder auch dem Deponieren von Fahrer-Utensilien, die ein Fahrer eines aufbewahrten zum Beispiel Scooters 100b deponieren möchte, über dessen Scooter-Ständer 3.2 sich jedoch kein zugeordnetes Fahrer-Schließfach befindet,
- oder auch als Liefer-Depot oder Paket-Station für von einem Lieferdienst für einen Kunden gelieferte Ware, sei es ein Paket oder bestellte Lebensmittel, für die der Kunde dieses Service-Modul als Zieladresse angegeben hat,
- oder als Ausgabe-Fach 23a eines Verkaufs- oder Ausleihe-Automaten 23, mittels dem gerade für Fahrer von Zweirädern 100 benötigte Produkte wie Helm, Helm-Innenpolster, Regenjacke, Handschuhe verkauft oder zum Verleihen zugänglich gemacht werden können.

Die dafür benötigten Funktionen wie Öffnen oder Verriegeln eines solchen Fußgänger-Schließfaches 16, Anzeige der Schließfach-Nummer auf dem Display 14, dafür notwendige Bezahlvorgänge etc. werden ebenfalls mittels der Bedien-Einheit 15 erledigt.

Falls auch frische Lebensmittel von Lieferdiensten angeliefert werden sollen, sind vorzugsweise zumindest einige der Fußgänger-Schließfächer 16 kühlbar oder gekühlt.

Falls ein Hauptmodul 1.1 mit seiner Rückseite 1b weder an einer Wand steht noch zwei Haupt-Module 1.1 Rücken an Rücken aufgestellt wurden, kann die Rückseite eines Haupt-Moduls 1.1 ebenfalls für Fußgänger-Schließfächer 16 genutzt werden.

Zu diesem Zweck kann - wie in **Figur 1c** dargestellt - der Raum in Tiefenrichtung 11 hinter den Fahrer-Schließfächern 6 für von der Rückseite 2b her zugängliche Fußgänger-Schließfächer 16 benutzt werden oder es kann an die Rückseite 2b ein sich insbesondere über die gesamte Rückseite 2b erstreckendes - nicht dargestelltes - Schließfach-Modul angestellt werden.

### BEZUGSZEICHENLISTE

- 1: Service-Modul
- 1a: Frontseite
- 1b: Rückseite
- 1c: Stirnseite
- 1.1: Haupt-Modul
- 1.2: Stirn-Modul
- 1.2a: Scooter-Stirnmodul
- 1. 2b: Bedien-Stirnmodul
- 2: Grundgestell
- 2a: aufrechte Stütze
- 2b: Rückwand
- 2c: Stirnwand
- 2d: Dach
- 3: Zweirad-Ständer
- 3': Einfahrrichtung
- 3a: Einfahr-Schiene
- 3b: Front-Aufnahme
- 3.1: Fahrrad-Ständer, Sitzrad-Ständer
- 3.2: Scooter-Ständer
- 3.2a: Vorderrad-Aufnahmen
- 3.2b: Hinterrad-Stütze
- 3.2c: Stützrolle
- 4: Abschließ-Vorrichtung, Anschließ-Vorrichtung
- 5: E-Ladeanschluss, Ladekabel
- 6: Fahrer-Schließfach
- 6a: Türen
- 6b: Lüftung-Öffnung
- 7: Fotovoltaik-Element
- 8: Puffer-Batterie
- 9: Zweirad-Ständer-Einheit
- 10: Längsrichtung
- 11: Tiefenrichtung
- 12: Vertikale
- 13: Eingabe-Einheit
- 14: Display
- 15: Bedien-Einheit
- 16: Fußgänger-Schließfach
- 17: Notfall-Knopf
- 18: Beleuchtungs-Einheit
- 19: Mikrofon
- 20: Kamera
- 21: Bezahl-Einheit
- 22: Hubvorrichtung
- 22a: Schwenkarm
- 22b 23: Automat
- 23a: Ausgabefach
- 24: Seil
- 25: Lautsprecher
- 26: Ablagebrett
- 27: Werkzeug
- 28: Luftpumpe
- 28a: Luftschlauch
- 100: E-Zweirad
- 101: Lenker
- 102: Akku
- 103: Reifen
- 100a: Fahrrad, E-Fahrrad, E-Sitzrad,
- 100b: Scooter, E-Scooter

## Patentansprüche

1. **E-Service-Modul (1)** für Fahrer von E-Zweirädern (100), mit
- einem gebäudeartigen Grundgestell (2), welches zumindest aufrechte Stützen (2a) und ein davon getragenes Dach (2b) umfasst,
- mehreren daran oder darin, insbesondere nebeneinander, befestigten Zweirad-Ständern (3) mit
- einer Abschließ-Vorrichtung (4), insbesondere Anschließ-Vorrichtung (4) zum Fixieren am Zweirad-Ständer (3), für das Zweirad (100) und
- einem zugeordneten E-Ladeanschluss (5) unter dem Dach (2b),
- Fahrer-Schließfächern (6) mit einer Größe, die zumindest zur Aufnahme eines Helms sowie eines Kleidungsstücks wie Jacke und/oder Handschuhe ausreicht;
wobei
- wenigstens den Zweirad-Ständern (3), die für Sitz-Räder, insbesondere Fahrräder oder Sitz-Roller, geeignet sind,
- je ein Fahrer-Schließfach (6) räumlich zugeordnet ist und/oder
- der E-Ladeanschluss (5) räumlich zugeordnet ist, **dadurch gekennzeichnet, dass**
- die Abschließ-Vorrichtung (4), und/oder der E-Ladeanschluss (5) zumindest teilweise im Fahrer-Schließfach (6) angeordnet ist; und
- das Fahrer-Schließfach (6) über einem Zweirad-Ständer (3) angeordnet ist in einer solchen Position,
dass das Fahrer-Schließfach (6) von einem hinter einem in diesem Zweirad-Ständer (3) eingestellten Sitz-Zweirad stehenden Fahrer erreich-30 bar ist derart, dass es in der Aufsicht betrachtet so nah am hinteren Ende des Zweirad- Ständers (3) angeordnet ist, dass der hinter dem Sitz-Zweirad stehende Fahrer hineingreifen und darin agieren kann, wobei das Fahrer-Schließfach (6) so hoch über dem darunter stehenden E-Zweirades (100) und Zweirad-Ständer (3) angeordnet ist, dass das Einfahren eines Sitz-Zweirades (100a) und Betätigen der Abschließ-Vorrichtung (4) darunter möglich ist.

2. E-Service-Modul nach Anspruch 1,
**dadurch gekennzeichnet, dass**
wenigstens eine umschlossene und vom Fahrer/Kunden abschließbare Einzelbox zum Unterbringen eines Zweirades (100) im Modul vorhanden ist, die einen Zweirad-Ständer (3) sowie ein Fahrer-Schließfach (6) enthält.

3. E-Service-Modul nach Anspruch 1 oder 2,
**dadurch gekennzeichnet, dass**
- wenigstens ein Teil des Fahrer-Schließfaches (6) beheizbar ist, insbesondere durch einen elektrisch betriebenen Heizlüfter oder die Abwärme des Puffer-Akkus (8) oder eines Spannungs-Wandlers oder eines Gleichrichters.

4. E-Service-Modul nach einem der vorhergehenden Ansprüche,
**dadurch gekennzeichnet, dass**
- das Dach (2d) auch die Betriebs-Fläche vor den Zweirad-Ständern (3) überdacht, auf der sich der Fahrer aufhält während des Einstellens oder Entnehmens eines Zweirades (100),
und/oder
- mehrere Zweirad-Ständer (3) nebeneinander entlang insbesondere einer Längs-Seite des Service-Moduls (1) aufgereiht sind.

5. E-Service-Modul nach einem der vorhergehenden Ansprüche, **dadurch gekennzeichnet, dass**
- das Service-Modul (1) mobil ist,
- insbesondere kranbar oder fahrbar ist.

6. E-Service-Modul nach einem der vorhergehenden Ansprüche,
**dadurch gekennzeichnet, dass**
- das Service-Modul (1) auf dem Dach und/oder der Außenfläche von Seitenwand oder Rückwand ein Fotovoltaik-Element (7) oder eine bewachsene Grünfläche aufweist
- und insbesondere einen Puffer-Akku (8) aufweist, der von dem Fotovoltaik-Element (7) und/oder über einen Netzanschluss aufladbar ist,
- und der insbesondere die E-Ladeanschlüsse (5) mit Strom versorgt.

7. Service-Modul nach einem der vorhergehenden Ansprüche,
**dadurch gekennzeichnet, dass**
eine Bedien-Einheit (15) vorhanden ist, die vorzugsweise
- ein Display (14) sowie eine Eingabe-Einheit (13) wie eine Tastatur oder einen berührungsempfindlichen Bildschirm umfasst,
und/oder
- eine Bezahl-Einheit (9) wie einen Karten-Leser aufweist und/oder
- ein Navigations-Programm umfasst.

8. E-Service-Modul nach einem der vorhergehenden Ansprüche,
**dadurch gekennzeichnet, dass**
das Service-Modul (1) aufweist
- einen Notfall-Knopf (17) zum Anfordern von Hilfe, und/oder
- eine Beleuchtungs-Einheit (18) zum Beleuchten zumindest des inneren des Service-Moduls (1), insbesondere auch der nahen Umgebung,
und/oder
- wenigstens eine Kamera (20) und/oder ein Mikrofon (19), die das Innere des Service-Moduls (1) aufnimmt, insbesondere auch die nahe Umgebung,
und/oder
- einen Brandmelder, der übermäßige Hitze-Entwicklung oder Rauch-Entwicklung in oder an dem Service-Modul (1) detektiert und der insbesondere einen Feuerlöscher freigibt oder eine installierte Lösch-Vorrichtung auslöst,
und/oder
- eine Desinfektions-Vorrichtung, die insbesondere mittels chemischem Desinfektionsmittel oder Ultraviolett-Bestrahlung oder Ozon-Flutung arbeitet, insbesondere im Inneren des Schließfaches.

9. E-Service-Modul nach einem der vorhergehenden Ansprüche,
**dadurch gekennzeichnet, dass**
- die Zweirad-Ständer (3) für Sitz-Zweiräder (100a) so ausgebildet sind, dass sie unterschiedliche Arten von Sitz-Zweiräder (100a) aufnehmen können, insbesondere E-Fahrräder als auch E-Roller.

10. E-Service-Modul nach einem der vorhergehenden Ansprüche,
**dadurch gekennzeichnet, dass**
- das Service-Modul (1) abschließbare Fußgänger-Schließfächer (16) umfasst,
- die insbesondere abseits der Zweirad-Ständer (3) angeordnet sind, und/oder
- die insbesondere in einem Fußgänger-Modul zusammengefasst sind, und/oder
- die kühlbar und/oder beheizbar, insbesondere auf mindestens 60°, besser mindestens 70 °C, sind, und insbesondere eine Zeitsteuerung für den Kühlvorgang oder Heizvorgang vorhanden ist.

11. E-Service-Modul nach einem der vorhergehenden Ansprüche,
**dadurch gekennzeichnet, dass**
- das Fußgänger-Modul auf die Abmessungen einer Stirnfläche des Service-Moduls (1) abgestimmt ist,
und/oder
- das Fußgänger-Modul die Bedieneinheit (15) mit umfasst und/oder
- die innerhalb eines Service-Moduls (1) nebeneinander angeordneten Zweirad-Ständer (3) miteinander verbunden sind zu einer Zweirad-Ständer-Einheit (9).

12. Service-Modul nach einem der vorhergehenden Ansprüche,
**dadurch gekennzeichnet, dass**
- von den zur Aufnahme von E-Scootern vorgesehenen Scooter-Ständer-Einheiten zwei übereinander angeordnet sind,
- die obere von zwei übereinander angeordneten Scooter-Ständer-Einheiten mittels einer Hub-Vorrichtung (22) angebracht ist, insbesondere mithilfe eines Hub-Motors (22b),
- im abgesenkten Zustand der oberen Scooter-Ständer-Einheiten ausschließlich diese und nicht die untere zum Einstellen oder Entnehmen von Scootern zugänglich ist.

13. E-Service-Modul nach einem der vorhergehenden Ansprüche,
**dadurch gekennzeichnet, dass**
- das Service-Modul einen Automaten (23) mit einem Ausgabefach (23a) zum Ausgeben von ausgeliehenen oder verkauften Gegenständen, insbesondere einem Helm und/oder Helm-Innenpolstern, umfasst
- insbesondere das Ausgabefach eines der Fußgänger-Schließfächer (16) ist und die Steuerung des Automaten Bestandteil der Bedien-Einheit (15) ist.

## Claims

1. **E-service module (1)** for riders of e-two-wheelers (100), having
- a building-like base frame (2) which comprises at least upright supports (2a) and a roof (2b) supported by the latter,
- a plurality of two-wheeled stands (3) fastened thereto or therein, in particular next to one another, with
- a locking device (4), in particular a connecting device (4) for fixing to the two-wheel stand (3), for the two-wheeler (100) and
- an associated e-charging connection (5) under the roof (2b),
- driver's lockers (6) of a size at least sufficient to accommodate a helmet and an item of clothing such as a jacket and/or gloves;
wherein
- at least to the two-wheel stands (3) being suitable for seated bicycles, in particular bicycles or seated scooters,
- a driver's locker (6) is spatially assigned to each of them and/or
- the e-charging connection (5) is spatially assigned,
**characterised in that**
- the locking device (4) and/or the e-charging connection (5) is arranged at least partially in the driver's locker (6);
and
- the driver's locker (6) is arranged above a two-wheel stand (3) in such a position,
- that the driver's locker (6) is accessible from a rider standing behind a seated two-wheeler positioned in said two-wheeler stand (3), such that it is positioned close to the rear end of the two-wheeler stand (3) as seen in plan view, the driver standing behind the seated two-wheeler can reach in and act therein, wherein the driver's locker (6) is arranged so high above the e-two-wheeler (100) and two-wheeler stand (3) standing underneath that it is possible to enter a seated two-wheeler (100a) and actuate the locking device (4) underneath.

2. E-service module according to Claim 1,
**characterIsed in that**
at least one enclosed individual box, which can be locked by the driver/customer, for accommodating a two-wheeler (100) is provided in the module and contains a two-wheeler stand (3) and a driver's locker (6).

3. E-service module according to Claims 1 or 2,
**characterIsed in that**
- at least a part of the driver's locker (6) can be heated, in particular by an electrically operated fan heater or the waste heat of the buffer battery (8) or a voltage converter or a rectifier.

4. E-service module according to one of the preceding Claims,
**characterIsed in that**
- the roof (2d) also covers the operating area in front of the two-wheel stands (3) on which the driver is located while entering or removing a two-wheeler (100),
and/or
- several two-wheel stands (3) are lined up next to each other, in particular along one longitudinal side of the service module (1).

5. E-service module according to one of the preceding Claims,
**characterIsed in that**
- the service module (1) is mobile,
- in particular cranable or drivable.

6. E-service module according to one of the preceding Claims,
**characterIsed in that**
- the service module (1) has a photovoltaic element (7) or a gardened green area on the roof and/or the outer surface of the side wall or rear wall
- and in particular has a buffer battery (8) which can be charged by the photovoltaic element (7) and/or via a mains connection,
- and which in particular supplies the e-charging connections (5) with power.

7. Service module according to one of the preceding Claims,
**characterIsed in that**
an operating unit (15) is provided, which preferably has
- a display (14) and an input unit (13) such as a keyboard or a touch-sensitive screen,
and/or
- has a payment unit (9) such as a card reader
and/or
- comprises a navigation program.

8. E-service module according to any of the preceding Claims, **characterIsed in that**
the service module (1) comprises
- an emergency button (17) for requesting assistance,
and/or
- an illumination unit (18) for illuminating at least the interior of the service module (1), in particular also the near surroundings,
and/or
- at least one camera (20) and/or a microphone (19) for recording the interior of the service module (1), in particular also the near surroundings,
and/or
- a fire detector which detects excessive heat development or smoke development in or on the service module (1) and which in particular releases a fire extinguisher or triggers an installed extinguishing device,
and/or
- a disinfection device which operates in particular by means of chemical disinfectant or ultraviolet irradiation or ozone flooding, in particular inside the locker.

9. E-service module according to one of the preceding Claims,
**characterIsed in that**
- the two-wheeled stands (3) for seated two-wheelers (100a) are designed to accommodate different types of seated two-wheelers (100a), in particular e-bicycles as well as e-scooters.

10. E-service module according to one of the preceding Claims,
**characterIsed in that**
- the service module (1) comprises lockable pedestrian lockers (16),
- which are arranged in particular away from the two-wheeler stands (3), and/or
- which are in particular combined in a pedestrian module,
and/or
- which can be cooled and/or heated, in particular to at least 60°C, preferably at least 70°C, and in particular a timer is provided for the cooling or heating process.

11. E-service module according to one of the preceding Claims,
**characterIsed in that**
- the pedestrian module is adapted to the dimensions of an end face of the service module (1),
and/or
- the pedestrian module also comprises the operating unit (15)
and/or
- the two-wheel stands (3) arranged next to one another within a service module (1) are connected to one another to form a two-wheel stand unit (9).

12. E-service module according to one of the preceding Claims,
**characterIsed in that**
- of the scooter stand units provided for receiving e-scooters, two are arranged one above the other,
- the upper of the two scooter stand units arranged one above the other is mounted by means of a lifting device (22), in particular with the aid of a lifting motor (22b),
- in the lowered state of the upper scooter stand units, only this and not the lower one is accessible for entering or removing scooters.

13. E-service module according to one of the preceding Claims,
**characterIsed in that**
- the service module comprises a vending machine (23) with a dispensing compartment (23a) for dispensing borrowed or sold items, in particular a helmet and/or helmet inner pads
- in particular the dispensing compartment is one of the pedestrian lockers (16) and the control of the vending machine is part of the operating unit (15).

## Revendications

1. **Module de service électronique** (1) pour les conducteurs de deux-roues électriques (100), avec
- un châssis de base (2) en forme de bâtiment, qui comprend au moins des supports verticaux (2a) et un toit (2b) porté par ceux-ci,
- plusieurs supports de deux-roues (3) fixés sur ou dans le châssis, en particulier les uns à côté des autres, avec
- un dispositif de verrouillage (4), en particulier un dispositif de d'attachement (4) pour la fixation sur le support de deux-roues (3), pour le deux-roues (100) et
- une prise de charge électrique (5) associée sous le toit (2b),
- des casiers de conducteur (6) d'une taille suffisante pour recevoir au moins un casque ainsi qu'un vêtement tel qu'une veste et/ou des gants,
dans lequel
- au moins aux supports de deux-roues (3) adaptés pour des vélos à siège, en particulier des vélos ou les scooters à siège,
- un casier de conducteur (6) respectif est associé spatialement, et/ou
- la connexion de charge électrique (5) est associée spatialement, **caractérisé en ce que**
- le dispositif de verrouillage (4) et/ou la connexion de charge électrique (5) sont disposés au moins partiellement dans le casier de conducteur (6) ; et
- le casier de conducteur (6) est disposé au-dessus d'un support de deux-roues (3) dans une position telle que le casier de conducteur (6) est accessible par un conducteur debout derrière un deux-roues assis garé dans ce support de deux-roues (3), de telle sorte qu'il est disposé, vu en plan, si près de l'extrémité arrière dudit support de deux-roues (3), que le conducteur debout derrière le deux-roues assis peut y accéder et agir à l'intérieur, le casier de conducteur (6) étant disposé suffisamment haut au-dessus du deux-roues électrique (100) et du support de deux-roues (3) situés en dessous pour permettre l'introduction d'un deux-roues assis (100a) et l'actionnement du dispositif de verrouillage (4) situé en dessous.

2. Module de service électronique selon la revendication 1,
**caractérisé en ce que**
au moins un box individuel fermé et pouvant être verrouillé par le conducteur/client est présent dans le module pour loger un deux-roues (100), lequel contient un support de deux-roues (3) ainsi qu'un casier de conducteur (6).

3. Module de service électronique selon la revendication 1 ou 2,
**caractérisé en ce que**
- au moins une partie du casier de conducteur (6) peut être chauffée, notamment par un ventilateur de chauffage électrique ou par la chaleur dégagée par la batterie tampon (8) ou par un convertisseur de tension ou un redresseur.

4. Module de service électronique selon l'une des revendications précédentes,
**caractérisé en ce que**
- le toit (2d) couvre également la surface de service devant les supports de deux-roues (3), sur laquelle le conducteur se trouve pendant le placement ou le retrait d'un deux-roues (100),
et/ou
- plusieurs supports de deux-roues (3) sont alignés les uns à côté des autres, en particulier le long d'un côté longitudinal du module de service (1).

5. Module de service électronique selon l'une des revendications précédentes,
**caractérisé en ce que**
- le module de service (1) est mobile,
- il peut notamment être gruté ou déplacé.

6. Module de service électronique selon l'une des revendications précédentes,
**caractérisé en ce que**
- le module de service (1) comporte, sur le toit et/ou la surface extérieure de la paroi latérale ou de la paroi arrière, un élément photovoltaïque (7) ou un espace vert recouvert de végétation,
- et présente en particulier une batterie tampon (8) qui peut être rechargée par l'élément photovoltaïque (7) et/ou par le biais d'un raccordement au réseau,
- et qui alimente en particulier les bornes de charge électrique (5).

7. Module de service selon l'une des revendications précédentes,
**caractérisé en ce que**
il existe une unité de commande (15) qui comprend de préférence
- un dispositif de visualisation (14) ainsi qu'une unité d'entrée (13) telle qu'un clavier ou un écran sensible au toucher,
et/ou
- une unité de paiement (9) telle qu'un lecteur de carte et/ou
- un programme de navigation.

8. Module de service électronique selon l'une des revendications précédentes,
**caractérisé en ce que**
le module de service (1) comporte
- un bouton d'urgence (17) pour demander de l'aide,
et/ou
- une unité d'éclairage (18) pour éclairer au moins l'intérieur du module de service (1), en particulier également l'environnement proche,
et/ou
- au moins une caméra (20) et/ou un microphone (19) qui enrégistre l'intérieur du module de service (1), en particulier aussi l'environnement proche,
et/ou
- un détecteur d'incendie qui détecte un développement excessif de chaleur ou de fumée dans ou sur le module de service (1) et qui, en particulier, libère un extincteur ou déclenche un dispositif d'extinction installé,
et/ou
- un dispositif de désinfection, notamment au moyen d'un désinfectant chimique ou d'un rayonnement ultraviolet ou d'une injection d'ozone, en particulier à l'intérieur du casier.

9. Module de service électronique selon l'une des revendications précédentes,
**caractérisé en ce que**
- les supports de deux-roues (3) pour deux-roues assis (100a) sont adaptés pour recevoir différents types de deux-roues assis (100a), notamment des vélos électriques ainsi que des scooters électriques.

10. Module de service électronique selon l'une des revendications précédentes,
**caractérisé en ce que**
- le module de service (1) comprend des casiers piétons (16) verrouillables,
- qui sont notamment disposés à l'écart des supports de deux-roues (3), et/ou
- qui sont notamment regroupés dans un module pour piétons,
et/ou
- qui peuvent être refroidis et/ou chauffés, notamment à au moins 60 °C, mieux à au moins 70 °C, et il existe notamment une commande temporelle pour le processus de refroidissement ou le processus de chauffage.

11. Module de service électronique selon l'une des revendications précédentes,
**caractérisé en ce que**
- le module piéton est adapté aux dimensions d'une face frontale du module de service (1),
et/ou
- le module piéton comprend également l'unité de commande (15) et/ou
- les supports de deux roues (3), disposés les uns à côté des autres, à l'intérieur d'un module de service (1) sont reliés entre eux pour former une unité de support de deux roues (9).

12. Module de service selon l'une des revendications précédentes,
**caractérisé en ce que**
- parmi les unités de supports de scooters prévues pour recevoir des scooters électriques, deux sont disposées l'une au-dessus de l'autre,
- l'unité supérieure des deux unités de support de scooter superposées est montée au moyen d'un dispositif de levage (22), notamment à l'aide d'un moteur de levage (22b),
- à l'état abaissé de l'unité supérieure de support de scooter, seule cette unité et non l'unité inférieure est accessible pour le placement ou le retrait de scooters.

13. Module de service électronique selon l'une des revendications précédentes,
**caractérisé en ce que**
- le module de service comprend un automate (23) comportant un compartiment de distribution (23a) pour la distribution d'objets prêtés ou vendus, notamment un casque et/ou des coussinets intérieurs de casque,
- en particulier le casier de distribution est l'un des casiers pour piétons (16) et la commande de l'automate fait partie de l'unité de commande (15).
